(19) Europäisches Patentamt
European Patent Office
Office européen des brevets

(11) **EP 3 859 925 B1**

(12) **EUROPEAN PATENT SPECIFICATION**

(45) Date of publication and mention of the grant of the patent:
**06.09.2023 Bulletin 2023/36**

(21) Application number: **20154047.3**

(22) Date of filing: **28.01.2020**

(51) International Patent Classification (IPC):
$B65H\ 59/38$ (2006.01)   $B65H\ 75/44$ (2006.01)
$B66D\ 1/38$ (2006.01)   $B66D\ 1/48$ (2006.01)
$B60L\ 5/00$ (2006.01)   $H02G\ 11/02$ (2006.01)
$B65H\ 75/42$ (2006.01)   $B60L\ 9/00$ (2019.01)

(52) Cooperative Patent Classification (CPC):
**B60L 5/00; B60L 9/00; B65H 59/384;
B65H 75/425; B65H 75/4402; B65H 75/4484;
B66D 1/38; B66D 1/485; H02G 11/02;**
B60L 2200/36; B60L 2200/40; B65H 2701/34

(54) **ARRANGEMENT, VEHICLE AND METHOD**

ANORDNUNG, FAHRZEUG UND VERFAHREN

AGENCEMENT, VÉHICULE ET PROCÉDÉ

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**04.08.2021 Bulletin 2021/31**

(73) Proprietor: **Sandvik Mining and Construction Oy
33330 Tampere (FI)**

(72) Inventors:
• **Aho, Heikki
20101 Turku (FI)**
• **Lehto, Tony
20101 TURKU (FI)**

(74) Representative: **Sandvik
Sandvik Mining and Construction Oy
Patent Department
PL 100
33311 Tampere (FI)**

(56) References cited:
CN-U- 203 273 010        DE-A1-102011 080 082
DE-T2- 69 733 546        DE-U1-202013 104 456
JP-A- H0 733 329        JP-A- H06 255 896
US-A1- 2013 098 525

**Description**

**BACKGROUND**

The invention relates to an arrangement for cable unwinding and winding in an electrically driven vehicle.

The invention further relates to an electrically driven vehicle.

The invention still further relates to a method for controlling cable winding and unwinding in an electrically driven vehicle.

Electrically-operated vehicles, such as mine machines, are becoming increasingly common. In this kind of vehicles, controlling winding and unwinding a cable extending from a reel (arranged in the vehicle) to a power source is typically relying on high and varying tension on cable. However, this may cause excessive wearing of the cable.

The documents JP H07 33329 A and DE 697 33 546 T2 disclose electrical vehicles, comprising a cable winding and unwinding arrangement.

**BRIEF DESCRIPTION**

Viewed from a first aspect, there can be provided an arrangement for cable unwinding and winding in an electrically driven vehicle, the arrangement comprising:

- a cable reel for a cable,
- a cable guiding arrangement for receiving and guiding the cable,
- the cable guiding arrangement comprising three contacting surfaces,
  arranged parallel and in a triangle arrangement,
- the contacting surfaces in the cable guide arrangement being arranged and dimensioned such that the cable arranged between one of the contacting surfaces on its first side and two of the contacting surfaces on its second side bends on a surface of at least one of the contacting surfaces,
- the arrangement further comprising a control arm and a controlling arrangement, the controlling arrangement comprising
- a force measuring system provided in at least one of the contacting surfaces and arranged to measure force caused by the cable against said contacting surface(s), the force measuring system providing a force,
- a control arm sensor arrangement arranged to detect the direction in which the control arm is pointing in relation to the longitudinal axis of the electrically driven vehicle, and for providing a control arm angle information,
- the cable guide arrangement comprising a rotational axis parallel with the normal axis of the triangle arrangement,

- the rotational axis of the cable guide arrangement and the centre axis of the cable reel being arranged in a same direction,
- the cable guide arrangement being attached pivotally in the control arm, and
- the control arm being arranged pivotally to a centre axis of the cable reel so that
- the rotational axis of the cable guide arrangement lies at a first distance from the centre axis of the cable reel and have an ability to rotate in relation to the cable reel, and
- a triangle sensor arrangement being arranged to evaluate a rotation angle of the triangle arrangement in respect to the control arm for providing a triangle angle information,

wherein the controlling arrangement is arranged to calculate an estimate of forces focusing on the cable based on the force the control arm angle information and on the triangle angle information.

Thereby an arrangement controlling reel force with force feedback and thus extending life span of the cable may be achieved. Furthermore, the arrangement may prevent the cable to be run over by the vehicle, which also extends life span of the cable.

Viewed from a further aspect, there can be provided a vehicle that comprises the arrangement for cable unwinding and winding mentioned above.

Thereby a vehicle wherein the reel force is controlled with force feedback and thus extending life span of the cable may be achieved.

Viewed from a still further aspect, there can be provided a method for controlling cable winding and unwinding in an electrically driven vehicle, in which method it is used an arrangement comprising

- a cable reel for a cable,
- a cable guiding arrangement for receiving and guiding the cable,
- the cable guiding arrangement comprising three contacting surfaces arranged parallel and in a triangle arrangement,
- the contacting surfaces in the cable guiding arrangement being arranged and dimensioned such that the cable arranged between one of the contacting surfaces on its first side and two of the contacting surfaces on its second side bends on a surface of at least one of the contacting surfaces, the arrangement further comprising a control arm and a controlling arrangement,
- the cable guiding arrangement comprising a rotational axis parallel with the normal axis of the triangle arrangement, and
- the cable guiding arrangement being attached pivotally by the rotational axis in the control arm, and
- the control arm being arranged pivotally to a centre axis of the cable reel so that
- the rotational axis of the cable guiding arrangement lies at a first distance from a centre axis of the cable reel and have an ability to rotate in relation to the cable reel, the method comprising:

- measuring force caused by the cable against one of the contacting surfaces, thus creating a value for a force,
- detecting the direction in which the control arm is pointing in relation to the longitudinal axis of the electrically driven vehicle, thus providing a control arm angle information,
- evaluating a rotation angle of the triangle arrangement in respect to the control arm, thus providing a triangle angle information, and
- calculating an estimate of forces focused on the cable based on the force, the control arm angle information and on the triangle angle information.

Thereby a method for controlling reel force with force feedback and thus extending life span of the cable may be achieved. Furthermore, the method may prevent the cable to be run over by the vehicle, which also extends life span of the cable.

The arrangement and the method are characterised by what is stated in the independent claims. Some other embodiments are characterised by what is stated in the other claims. Inventive embodiments are also disclosed in the specification and drawings of this patent application. The inventive content of the patent application may also be defined in other ways than defined in the following claims. The inventive content may also be formed of several separate inventions, especially if the invention is examined in the light of expressed or implicit sub-tasks or in view of obtained benefits or benefit groups. Some of the definitions contained in the following claims may then be unnecessary in view of the separate inventive ideas. Features of the different embodiments of the invention may, within the scope of the basic inventive idea, be applied to other embodiments.

In one embodiment, the cable guiding arrangement comprises three wheels, the contacting surfaces being on the wheel rim, and centre axis of said wheels being arranged parallel with the normal axis of the triangle arrangement, and wherein the rotational axis of the cable guiding arrangement is arranged inside the triangle arrangement. An advantage is that the guiding arrangement has a simple structure and, if the wheels are rotating, a low friction to the cable is created.

In one embodiment, the cable guiding arrangement comprises a rotational axis parallel with the normal axis of the triangle arrangement, and the rotational axis of the cable guide arrangement and the reel axis being arranged in a same direction. An advantage is that the arrangement may have simple structure.

In one embodiment, the cable guide arrangement is attached pivotally in the control arm, and the control arm is arranged pivotally to a centre axis of the cable reel so that the rotational axis of the cable wheel arrangement lies at a first distance from a centre axis of the cable reel and have an ability to rotate in relation to the cable reel, and a triangle sensor arrangement is arranged to evaluate a rotation angle of the triangle arrangement in respect to the control arm for providing a triangle angle information. An advantage is that the accuracy of the calculations may be increased.

In one embodiment, the controlling arrangement is arranged to choose between two computation model in the calculation of the forces focused on the cable, based on the control arm angle information. An advantage is that the accuracy of the calculations may be increased.

In one embodiment, in case the control arm sensor arrangement is detecting the control arm is pointing in a direction where the cable is contacting one of the contacting surfaces only, the calculation of the forces focusing in the cable is arranged to be based on the rotation angle and a current cable reel radius, and in case the control arm sensor arrangement is detecting the control arm is pointing in a direction where the cable is contacting all the contacting surfaces, the calculation of the forces focusing in the cable is arranged to be based on a predetermined angle, said predetermined angle being defined by dimensions of the cable wheel arrangement. An advantage is that the accuracy of the calculations may be increased even further.

In one embodiment, of method, the cable guiding arrangement comprises a rotational axis parallel with the normal axis of the triangle arrangement, and the cable guiding arrangement is attached pivotally by the rotational axis in the control arm, and the control arm is arranged pivotally to a centre axis of the cable reel so that the rotational axis of the cable guiding arrangement lies at a first distance from a centre axis of the cable reel and have an ability to rotate in relation to the cable reel, the method comprising:

- evaluating a rotation angle of the triangle arrangement in respect to the control arm, thus providing a triangle angle information, and
- calculating an estimate of forces focused on the cable based on the force, the control arm angle information and the triangle angle information. An advantage is that the accuracy of the calculations may be increased even further.

In one embodiment, the method comprises:

controlling torque of a reel motor, and
using calculated forces focusing in the cable in said controlling of torque. An advantage is that the force caused by the reel motor to the cable is directly controlled.

## BRIEF DESCRIPTION OF FIGURES

Some embodiments illustrating the present disclosure are described in more detail in the attached drawings, in which

Figure 1 is a schematic view of an arrangement, a vehicle and method for cable unwinding and winding in an electrically driven vehicle in partial cross-section,

Figures 2a and 2b are schematic views of a detail of the arrangement shown in Figure 1,

Figures 3a and 3b are schematic view of a geometrical principles,

Figures 4a - 4c are schematic views of an arrangement, a vehicle and method for cable unwinding and winding showing some alternative states of the arrangement,

Figures 5a and 5b are a schematic views of an arrangement, a vehicle and method for cable unwinding and winding in an electrically driven vehicle in partial cross-section, and

Figure 6 is a schematic view of an example, useful for understanding the invention, of the arrangement and method for cable unwinding and winding in an electrically driven vehicle. In the figures, some embodiments are shown simplified for the sake of clarity. Similar parts are marked with the same reference numbers in the figures.

## DETAILED DESCRIPTION

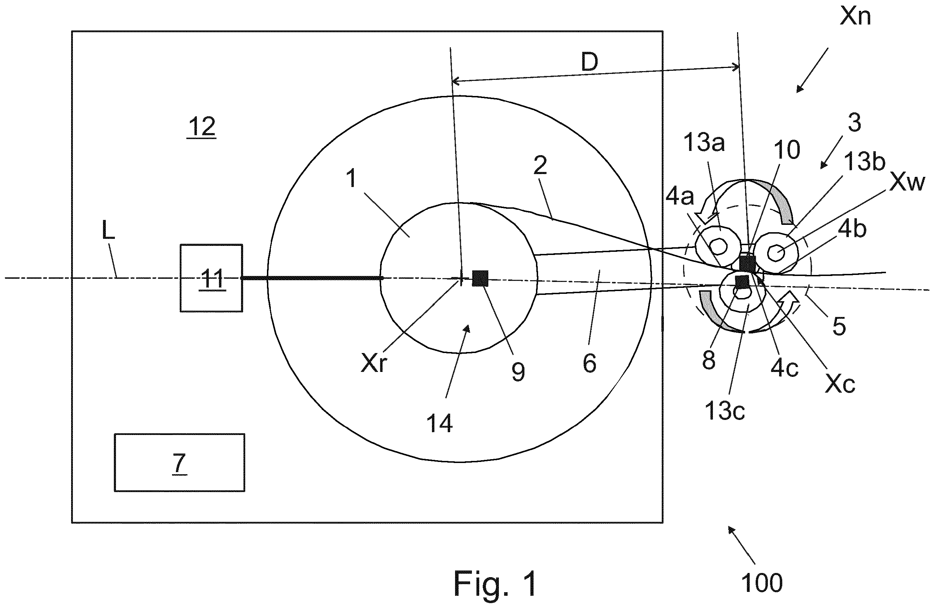

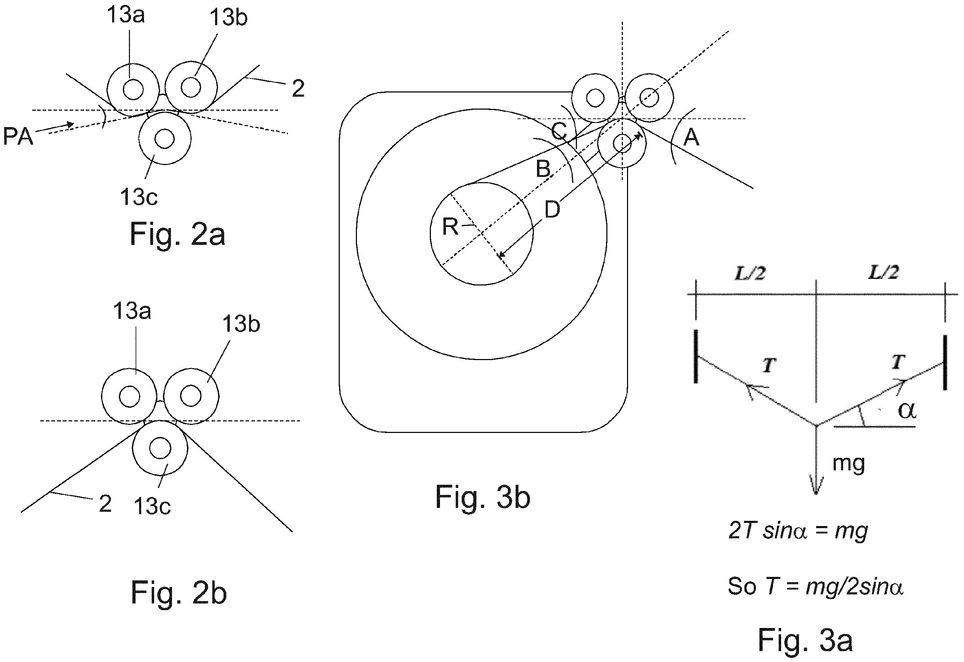

**Figure 1** is a schematic view of an embodiment of an arrangement, a vehicle and method for cable unwinding and winding in an electrically driven vehicle in partial cross-section, **Figures 2a and 2b** are schematic views of a detail of the arrangement shown in Figure 1, and **Figures 3a** and 3b are schematic views of a geometrical principle.

According to an aspect of the invention, the electrically driven vehicle 12 is a mine machine or a construction machine. In mines - such as underground mines and surface mines - and at other work sites different type of work machines are used. The work machine is provided with one or more working device(s). For instance, the mine machine may be provided with working device(s) for executing mine work task at a work site. The mine machine or a construction machine may be e.g. a rock drilling rig, a development drill, a tunneling drilling machine, a surface drilling machine, a bolting or reinforcing vehicle, a rock removal machine, a longhole drill rig, an explosive charging machine, a loader, a transport vehicle, a loading or hauling machine, setting vehicles of gallery arcs or nets, a concrete spraying machine, a crusher or a measuring vehicle.

The arrangement 100 comprises a cable reel 1 for a cable 2 and arranged in the vehicle 12. In an embodiment, such as shown in Figure 1, a centre axis Xr of the cable reel 1 is arranged in vertical position. However, the cable reel 1 may also be arranged other ways: the centre axis Xr may be horizontally arranged, for instance.

The cable 2 is arranged for supplying electric energy from an electrical network to the vehicle 12.

The arrangement 100 further comprises a cable guiding arrangement 3 that receives and guides the cable 2. In the embodiment shown in Figure 1, the cable guiding arrangement 3 comprises three wheels 13a - 13c that may rotate around their centre axis, respectively.

The cable guiding arrangement 3 comprises three contacting surfaces 4a, 4b, 4c that are arranged parallel and in a triangle arrangement 5. In the embodiment shown in Figure 1, the contacting surfaces 4a, 4b, 4c are on wheels rims. In an embodiment, the wheels 13a - 13c, or at least one of them is/are rotatable, thus having ability to rotate with movements of the cable 2. The centre axis Xw of said wheels are arranged parallel with the normal axis Xn of the triangle arrangement 5. It is to be noted that said normal axis Xn is also normal of the plane of Figure 1.

In another embodiment, at least one of the wheels 13a - 13c is not rotating, but the cable 2 is arranged to slide over said wheel(s).

In the embodiment shown in Figure 1, all the wheels 13a - 13c have a same diameter. However, this is not necessary, i.e. there may be wheels of different size.

In an embodiment, at least one of the contacting surfaces 4a, 4b, 4c, or eve all of them, is realized without a wheel. For example, it is possible to use a sliding surface as the contacting surface. In an embodiment, the sliding surface comprises arc-like or semicircle contacting surface made of PTFE. However, the sliding surface(s) may affect to the rotation angle A of the triangle arrangement 5.

The contacting surfaces 4a, 4b, 4c are arranged and dimensioned such that the cable 2 being arranged between one of said contacting surfaces on its first side and two of said contacting surfaces on its second side bends on a surface of at least one of the contacting surfaces 4a, 4b, 4c.

The cable guide arrangement 3 comprises a rotational axis Xc that is parallel with the normal axis Xn of the triangle arrangement 5. The rotational axis Xc of the cable guide arrangement 3 and the reel axis Xr are arranged in a same direction. In another embodiment, the axes Xc and Xr are oriented in different directions.

The wheels 13a - 13c and thus the contacting surfaces 4a, 4b, 4c may rotate around said rotational axis Xc. In an embodiment, said rotational axis Xc is arranged in the middle point of the triangle arrangement 5. However, in another embodiments, the rotational axis Xc is arranged somewhat aside of said middle point, but anyway inside the triangle arrangement 5.

The arrangement further comprises a control arm 6 in which the cable guide arrangement 3 is attached pivotally by the rotational axis Xc. In an embodiment, the cable guide arrangement 3 may rotate freely in relation to the control arm 6. In another embodiment, there is a damping means (not shown) that resists the rotational movement of the cable guide arrangement 3.

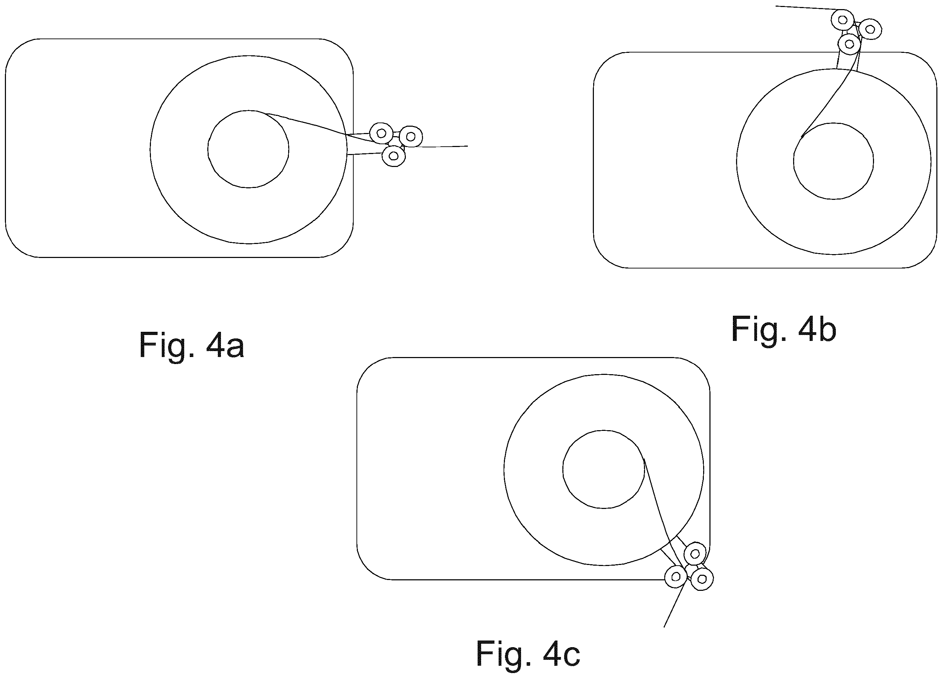

The length of the control arm 6 is preferably selected so that the cable guiding arrangement 3 is able to move past the sides of the vehicle 12, as shown in Figure 4b.

In an embodiment, such as shown in Figure 1, the control arm 6 is arranged pivotally to a centre axis Xr of the cable reel so that the rotational axis Xc of the cable wheel arrangement lies at a first distance D from a centre axis Xr of the cable reel. Thus, the cable guide arrangement 3 may rotate in relation to the cable reel 1 together with the control arm 6.

In an embodiment, the control arm 6 may rotate freely in relation to the cable reel 1. In another embodiment, there is a damping means (not shown) that resists the rotational movement of the control arm 6 in relation to the cable reel 1. In an embodiment, there is an actuator 14 that is arranged to actively rotate the control arm 6 in relation to the cable reel 1. For instance, the actuator 14 may be controlled such that the control arm 6 is forced by a predetermined force to be parallel with the longitudinal axis L of the vehicle. However, sometimes there is need for placing the cable on one of the sides of the vehicle. Then, the actuator 14 is arranged to turn the control arm 6 towards that side. Thus, the cable may be arranged so that vehicles moving on the same route do not run over the cable.

The arrangement further comprises a controlling arrangement 7 that is connected to a force measuring system 8, a control arm sensor arrangement 9 and a triangle sensor arrangement 10.

The force measuring system 8 is provided in at least one - even to all - of the guide surfaces 4a, 4b, 4c and arranged to measure force caused by the cable 2 against said guide surface(s). In the embodiment shown in Figure 1, the force measuring system 8 is arranged for measuring force caused to the wheel 13c that is alone on the first side of the cable 2. Based on the measurement, the force measuring system 8 provides an information of force F for the controlling arrangement 7. The force measuring system 8 may comprise e.g. a strain gauge, a force transducer, a position transducer, a pressure cell, an eddy-current transducer, etc.

The control arm sensor arrangement 9 is arranged to detect the direction in which the control arm 6 is pointing in relation to the longitudinal axis L of the electrically driven vehicle 12. Based on the detection, a control arm angle information CA is provided to the controlling arrangement 7. The control arm sensor arrangement 9 may comprise e.g. an optical encoder, a resistor potentiometer arrangement, a pulse transducer arrangement etc.

The triangle sensor arrangement 10 is arranged to evaluate a rotation angle C (shown in Figure 3b) of the triangle arrangement 5 in respect to the control arm 6. Based on the evaluation, a triangle angle information TA is provided to the controlling arrangement 7. In an embodiment, the information may have just two values indicating if the cable 2 is contacting just one contacting surface 4a - 4c or all of the contacting surfaces 4a - 4c. In this kind of embodiments, the triangle sensor arrangement 10 may comprise e.g. an inductive limit switch or a microswitch. If a more accurate information on the rotation angle C is needed, the triangle sensor arrangement 10 may comprise e.g. an optical encoder, a resistor potentiometer arrangement, a pulse transducer arrangement etc.

The controlling arrangement 7 is arranged to calculate an estimate of forces focusing on the cable 2 based on the force F, the control arm angle information CA and the triangle angle information TA. Referring to Figures 2a and 2b, the controlling arrangement 7 may be arranged to choose between two computation model in the calculation of the forces focused on the cable 2, based on the control arm angle information CA.

In case the control arm angle information CA is indicating that the control arm 6 is pointing in a direction where the cable 2 is contacting all the contacting surfaces 4a, 4b, 4c (as shown in Figure 2a), the calculation of the forces focusing in the cable 2 is arranged to be based on a predetermined angle PA that is defined by dimensions of the cable wheel arrangement 3. In an embodiment, the angle PA is in range of 2° - 5°, for instance 3°. **Figure 3a** is showing a geometrical principle that may be used for the calculation of the force focusing to the cable 2. In Figure 3a angle "$\alpha$" corresponds to the predetermined angle PA, "mg" corresponds to the force affecting to the measured by the force measuring system 8, and the force focusing to the cable 2 corresponds to "T".

In case the control arm angle information CA is indicating that the control arm 6 is pointing in a direction where the cable 2 is contacting one of the contacting surfaces 4a, 4b, 4c only (as shown in Figure 2b), the calculation of the forces focusing in the cable 2 is arranged to be based on the rotation angle C and a current cable reel radius R. In an embodiment, the radius R is measured by a sensor (not shown). In another embodiment, the radius R is estimated indirectly on basis of turns of the cable on the reel.

**Figure 3b** is showing a principle to define an angle A of force in this case. In this case, the angle A corresponds to angle $\alpha$ shown in Figure 3a. Here:

$$\text{angle A} = \text{angle C} - \text{angle B},$$

wherein

angle C is evaluated by the triangle sensor arrangement 10 as previously described, and
angle B = $\tan^{-1}(R/D)$, wherein R = radius of cable reel, and D = the first distance.

**Figures 4a** - **4c** are schematic views of an arrangement and method for cable unwinding and winding in some directions of the cable 2. In Figures 4a and 4b, the cable 2 is contacting all the wheels, whereas in Figure 4c the cable 2 is contacting only one of the wheels.

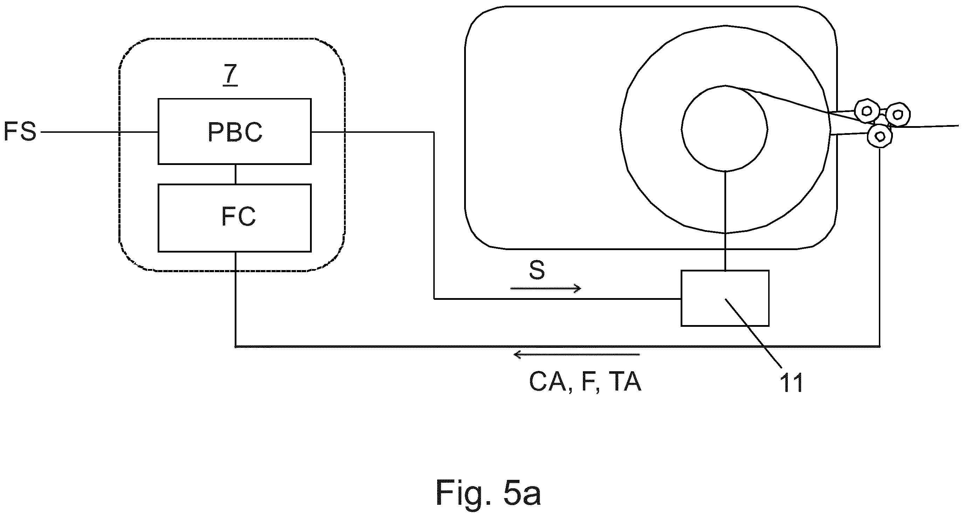

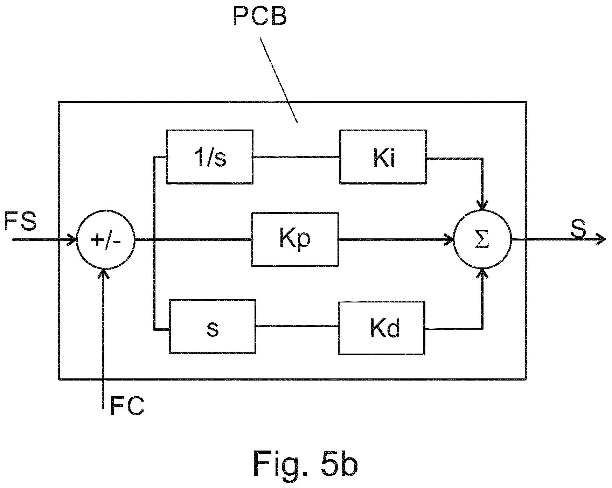

**Figure 5a** is a schematic view of a method for cable unwinding and winding in an electrically driven vehicle in partial cross-section, and Figure 5b is showing a detail of Figure 5a. In the method, the variables for calculating the forces focused on the cable 2 are estimated on basis of force F, control arm angle information CA and triangle angle information TA that are measured and defined as described in this description.

In the method, it is measured force caused by the cable against one of the contacting surfaces and created a value for the force F. Also, it is detected the direction in which the control arm 6 is pointing in relation to the longitudinal axis L of the electrically driven vehicle, and provided the control arm angle information CA. Furthermore, it is evaluated a rotation angle C of the triangle arrangement in respect to the control arm 6, and provided the triangle angle information TA. Then, the estimate of forces focused on the cable 2 is provided based on the force F, the control arm angle information CA and the triangle angle information TA. Force setpoint FS is given to the controlling arrangement 7, and a control signal S for controlling a reel motor 11 that is arranged to rotate the cable reel 1 is calculated (force calculation FC). A PID controller PBC may be used for providing the control signal S.

Figure 5b is showing the PID calculation step and controller PBC shown in Figure 5a. Value of the force setpoint FS is continuously compared with value of the force calculation FC, and an error value or feedback difference is calculated as the difference of FS and FC. Based on the feedback difference, the controller PCB applies a correction based on proportional (in Figure Kp = proportional gain), integral (1/s = integration time, Ki = integral gain), and derivative terms (s = derivative time, Kd = derivative gain). The controller PCB attempts to minimize the feedback difference, i.e. difference between FS and FC, by adjusting the control signal S.

The calculation of the estimation and providing the control signal S may be realized by a controlling arrangement 7 that comprises a processor (CPU) with a memory configured to store program code and dynamic data.

The control signal S is utilized in controlling the reel motor 11. In an embodiment, the reel motor 11 is controlled such that the cable 2 is under a constant stress, or a certain range of stress, during use of the vehicle 12. In an embodiment, it is controlled torque of the reel motor 11.

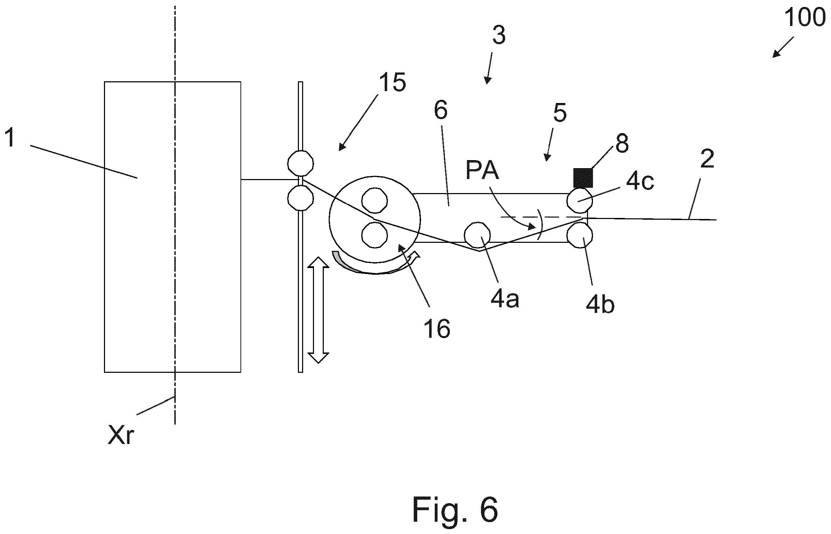

**Figure 6** is a schematic view of an example, useful for understanding the invention, J of the arrangement and method for cable unwinding and winding in an electrically driven vehicle.

According to an aspect, the contacting surfaces 4a, 4b, 4c of the cable guide arrangement 3 are arranged in another direction as the reel axis Xr. In the embodiment shown in Figure 6, the reel axis Xr is perpendicular to centre axis of wheels making the contacting surfaces 4a, 4b, 4c. The centre axes of wheels are vertically aligned.

The cable guiding arrangement 3 comprises control surfaces 16 that controls entry of the cable 2 to the triangle arrangement 5. In the embodiment shown in Figure 6, the control surfaces 16 are wheels. The control arm 6 is arranged to rotate around a rotational axis arranged in close proximity of the control surfaces 16.

Due to the control surfaces 16, the cable 2 is all the time contacting all the contacting surfaces 4a, 4b, 4c, and the calculation of the forces focusing in the cable 2 is based on a predetermined angle PA that is defined by dimensions of the cable wheel arrangement 3. In an embodiment, the angle PA is in range of 2° - 5°, for instance 3° .

The arrangement 100 further comprises a winding device 15 that makes it possible of winding and unwinding the cable 2 without problems even with very wide cable reels 1.

The drawings and the related description are only intended to illustrate the idea of the invention. The invention may vary in detail within the scope of the inventive idea defined in the following claims.

## REFERENCE SYMBOLS

| | |
|---|---|
| 1 | cable reel |
| 2 | cable |
| 3 | cable guiding arrangement |
| 4a-4c | contacting surface |
| 5 | triangle arrangement |
| 6 | control arm |
| 7 | controlling arrangement |
| 8 | force measuring system |
| 9 | control arm sensor arrangement |
| 10 | triangle sensor arrangement |
| 11 | reel motor |
| 12 | vehicle |
| 13a-13c | wheel |
| 14 | actuator |
| 15 | winding device |
| 16 | control surfaces |
| 100 | arrangement |
| A | angle of force |
| C | rotation angle |
| CA | angle information |
| D | first distance |
| F | force |
| FC | force calculation |
| FS | force setpoint |
| L | longitudinal axis |
| PA | predetermined angle |
| PBC | PID controller |

R        radius of reel
S        control signal
TA        arm angle information
Xc        rotational axis of cable guiding arrangement
Xr        centre axis of cable reel
Xn        normal axis of triangle arrangement
Xw        centre axis of wheel

**Claims**

1.  An arrangement (100) for cable unwinding and winding in an electrically driven vehicle, the arrangement comprising:

    - a cable reel (1) for a cable (2),
    - a cable guide arrangement (3) for receiving and guiding the cable (2),

        - the cable guide arrangement (3) comprising three contacting surfaces (4a, 4b, 4c), arranged parallel and in a triangle arrangement (5),
        - the contacting surfaces (4a, 4b, 4c) in the cable guide arrangement (3) being arranged and dimensioned such that the cable (2) arranged between one of the contacting surfaces on its first side and two of the contacting surfaces on its second side bends on a surface of at least one of the contacting surfaces (4a, 4b, 4c),

    - the arrangement further comprising a control arm (6) and a controlling arrangement (7), the controlling arrangement (7) comprising

        - a force measuring system (8) provided in at least one of the contacting surfaces (4a, 4b, 4c) and arranged to measure force caused by the cable against said contacting surface(s), the force measuring system (8) providing a force (F),
        - a control arm sensor arrangement (9) arranged to detect the direction in which the control arm (6) is pointing in relation to the longitudinal axis (L) of the electrically driven vehicle, and for providing a control arm angle information (CA),

    wherein

        - the cable guide arrangement (3) comprises a rotational axis (Xc) parallel with the normal axis (Xn) of the triangle arrangement (5),
        - the rotational axis (Xc) of the cable guide arrangement and the centre axis (Xr) of the cable reel are arranged in a same direction,
        - the cable guide arrangement (3) is attached pivotally in the control arm (6), and
    - the control arm (6) is arranged pivotally to a centre axis (Xr) of the cable reel so that
    - the rotational axis (Xc) of the cable guide arrangement lies at a first distance (D) from the centre axis (Xr) of the cable reel and have an ability to rotate in relation to the cable reel, and
    - a triangle sensor arrangement (10) is arranged to evaluate a rotation angle (A) of the triangle arrangement (5) in respect to the control arm (6) for providing a triangle angle information (TA), and wherein

    the controlling arrangement (7) is arranged to calculate an estimate of forces focusing on the cable (2) based on the force (F), the control arm angle information (CA) and the triangle angle information (TA).

2.  The arrangement as claimed in claim 1, wherein the cable guiding arrangement (3) comprises three wheels (13a - 13c), the contacting surfaces (4a, 4b, 4c) being on the wheel rim,

    centre axis (Xw) of said wheels being arranged parallel with the normal axis (Xn) of the triangle arrangement (5), and wherein
    the rotational axis (Xc) of the cable guiding arrangement is arranged inside the triangle arrangement (5).

3.  The arrangement as claimed in claim 1 or 2, wherein the controlling arrangement (7) is arranged to choose between two computation model in the calculation of the forces focused on the cable (2), based on the control arm angle information (CA) .

4.  The arrangement as claimed in claim 3, wherein in case the control arm sensor arrangement (9) is detecting the control arm (6) is pointing in a direction where the cable (2) is contacting one of the contacting surfaces (4a, 4b, 4c) only, the calculation of the forces focusing in the cable (2) is arranged to be based on the rotation angle (A) and a current cable reel radius (R), and wherein
    in case the control arm sensor arrangement (9) is detecting the control arm (6) is pointing in a direction where the cable (2) is contacting all the contacting surfaces (4a, 4b, 4c), the calculation of the forces focusing in the cable (2) is arranged to be based on a predetermined angle (PA), said predetermined angle (PA) being defined by dimensions of the cable wheel arrangement (3).

5.  The arrangement as claimed in claim 1 or 2, wherein the contacting surfaces (4a, 4b, 4c) of the cable guide arrangement (3) are arranged in another direction as the reel axis (Xr).

**6.** An electrically driven vehicle (12), comprising the arrangement claimed in any of the preceding claims.

**7.** The vehicle as claimed in claim 6, being a mine machine.

**8.** The vehicle as claimed in claim 6, being a construction machine.

**9.** Method for controlling cable (2) winding and unwinding in an electrically driven vehicle, in which method it is used an arrangement comprising

- a cable reel (1) for a cable (2),
- a cable guiding arrangement (3) for receiving and guiding the cable (2),
- the cable guiding arrangement (3) comprising three contacting surfaces (4a, 4b, 4c) arranged parallel and in a triangle arrangement (5),
- the contacting surfaces (4a, 4b, 4c) in the cable guiding arrangement (3) being arranged and dimensioned such that the cable arranged between one of the contacting surfaces on its first side and two of the contacting surfaces on its second side bends on a surface of at least one of the contacting surfaces (4a, 4b, 4c),
- the arrangement further comprising a control arm (6) and a controlling arrangement (7), wherein
- the cable guiding arrangement (3) comprises a rotational axis (Xc) parallel with the normal axis (Xn) of the triangle arrangement (5), and
- the cable guiding arrangement (3) is attached pivotally by the rotational axis (Xc) in the control arm (6), and
- the control arm (6) is arranged pivotally to a centre axis (Xr) of the cable reel so that
- the rotational axis (Xc) of the cable guiding arrangement lies at a first distance (D) from a centre axis (Xr) of the cable reel and have an ability to rotate in relation to the cable reel, the method comprising:
- measuring force caused by the cable against one of the contacting surfaces, thus creating a value for a force (F),
- detecting the direction in which the control arm (6) is pointing in relation to the longitudinal axis (L) of the electrically driven vehicle, thus providing a control arm angle information (CA),
- evaluating a rotation angle (C) of the triangle arrangement in respect to the control arm (6), thus providing a triangle angle information (TA), and
- calculating an estimate of forces focused on the cable (2) based on the force (F), the control arm angle information (CA) and the triangle angle information (TA).

**10.** The method as claimed in claim 9, comprising choosing between two computation model in the calculation of the forces focused on the cable (2), based on the control arm angle information (CA).

**11.** The method as claimed in claim 10, wherein in case the control arm (6) is pointing in a direction where the cable (2) is contacting one of the contacting surfaces (4a, 4b, 4c) only:

calculating the forces focusing in the cable (2) based on the rotation angle (C) and a current cable reel radius (R), and wherein
in case the control arm (6) is pointing in a direction where the cable (2) is contacting all the contacting surfaces (4a, 4b, 4c):
calculating the forces focusing in the cable (2) based on a predetermined angle (PA), said predetermined angle (PA) being defined by dimensions of the cable wheel arrangement (3) .

**12.** The method as claimed in any of the claims 9 - 11, comprising controlling torque of a reel motor (11), and using calculated forces focusing in the cable (2) in said controlling of torque.

**Patentansprüche**

**1.** Anordnung (100) zum Abwickeln und Aufwickeln von Kabeln in einem elektrisch angetriebenen Fahrzeug, wobei die Anordnung umfasst:

- eine Kabelhaspel (1) für ein Kabel (2),
- eine Kabelführungsanordnung (3) zum Aufnehmen und Führen des Kabels (2),

- wobei die Kabelführungsanordnung (3) drei Kontaktflächen (4a, 4b, 4c) umfasst, die parallel und in einer Dreiecksanordnung (5) angeordnet sind,
- wobei die Kontaktflächen (4a, 4b, 4c) in der Kabelführungsanordnung (3) so angeordnet und dimensioniert sind, dass sich das zwischen einer der Kontaktflächen auf seiner ersten Seite und zwei der Kontaktflächen auf seiner zweiten Seite angeordnete Kabel (2) an einer Oberfläche von mindestens einer der Kontaktflächen (4a, 4b, 4c) biegt,

- wobei die Anordnung weiter einen Lenker (6) und eine Steueranordnung (7) umfasst, wobei die Steueranordnung (7) Folgendes umfasst

- ein Kraftmesssystem (8), das in mindestens einer der Kontaktflächen (4a, 4b, 4c) bereitgestellt und so angeordnet ist, dass es die durch das Kabel gegen die Kontaktfläche(n) verursachte Kraft misst, wobei das Kraftmesssystem (8) eine Kraft (F) bereitstellt,

- eine Lenkersensoranordnung (9), die dazu angeordnet ist, dass sie die Richtung erkennt, in die der Lenker (6) in Bezug auf die Längsachse (L) des elektrisch angetriebenen Fahrzeugs zeigt, und um Lenkerwinkelinformationen (CA) bereitzustellen, wobei

- die Kabelführungsanordnung (3) eine zur Normalachse (Xn) der Dreiecksanordnung (5) parallele Drehachse (Xc) umfasst,
- die Drehachse (Xc) der Kabelführungsanordnung und die Mittelachse (Xr) der Kabelhaspel in einer gleichen Richtung angeordnet sind,
- die Kabelführungsanordnung (3) schwenkbar im Lenker (6) befestigt ist, und
- der Lenker (6) schwenkbar um eine Mittelachse (Xr) der Kabelhaspel angeordnet ist, so dass
- die Drehachse (Xc) der Kabelführungsanordnung bei einem ersten Abstand (D) von der Mittelachse (Xr) der Kabelhaspel liegt und relativ zur Kabelhaspel drehbar ist, und
- eine Dreieckssensoranordnung (10) so angeordnet ist, dass sie einen Drehwinkel (A) der Dreiecksanordnung (5) in Bezug auf den Lenker (6) auswertet, um Dreieckswinkelinformationen (TA) bereitzustellen, und wobei

die Steueranordnung (7) angeordnet ist, um basierend auf der Kraft (F), den Lenkerwinkelinformationen (CA) und den Dreieckswinkelinformationen (TA) eine Schätzung der auf das Kabel (2) konzentrierten Kräfte zu berechnen.

2. Anordnung nach Anspruch 1, wobei die Kabelführungsanordnung (3) drei Räder (13a - 13c) umfasst, sich die Kontaktflächen (4a, 4b, 4c) auf der Radfelge befinden,

die Mittelachse (Xw) der Räder parallel zur Normalachse (Xn) der Dreiecksanordnung (5) angeordnet ist, und wobei
die Drehachse (Xc) der Kabelführungsanordnung innerhalb der Dreiecksanordnung (5) angeordnet ist.

3. Anordnung nach Anspruch 1 oder 2, wobei die Steueranordnung (7) angeordnet ist, bei der Berechnung der auf das Kabel (2) konzentrierten Kräfte basierend auf den Lenkerwinkelinformationen (CA) zwischen zwei Berechnungsmodellen zu wählen.

4. Anordnung nach Anspruch 3, wobei in dem Fall, dass die Lenkersensoranordnung (9) erkennt, dass der Lenker (6) in eine Richtung zeigt, in der das Kabel (2) nur eine der Kontaktflächen (4a, 4b, 4c) berührt, die Berechnung der Kräfte, die sich in dem Kabel (2) konzentrieren, so angeordnet ist, dass sie auf dem Drehwinkel (A) und einem aktuellen Kabelhaspelradius (R) basiert, und wobei
für den Fall, dass die Lenkersensoranordnung (9) erkennt, dass der Lenker (6) in eine Richtung zeigt, in der das Kabel (2) alle Kontaktflächen (4a, 4b, 4c) berührt, die Berechnung der Kräfte, die sich in dem Kabel (2) konzentrieren, so angeordnet ist, dass sie auf einem vorbestimmten Winkel (PA) basiert, wobei der vorbestimmte Winkel (PA) von den Abmessungen der Leitrollenanordnung (3) definiert wird.

5. Anordnung nach Anspruch 1 oder 2, wobei die Kontaktflächen (4a, 4b, 4c) der Kabelführungsanordnung (3) in einer anderen Richtung als die Haspelachse (Xr) angeordnet sind.

6. Elektrisch angetriebenes Fahrzeug (12), umfassend die Anordnung nach einem der vorstehenden Ansprüche.

7. Fahrzeug nach Anspruch 6, wobei es eine Bergwerksmaschine ist.

8. Fahrzeug nach Anspruch 6, wobei es eine Baumaschine ist.

9. Verfahren zum Steuern vom Aufwickeln und Abwickeln von Kabeln (2) in einem elektrisch angetriebenen Fahrzeug, wobei bei dem Verfahren eine Anordnung verwendet wird, die Folgendes umfasst

- eine Kabelhaspel (1) für ein Kabel (2),
- eine Kabelführungsanordnung (3) zum Aufnehmen und Führen des Kabels (2),
- wobei die Kabelführungsanordnung (3) drei parallel und in einer Dreiecksanordnung (5) angeordnete Kontaktflächen (4a, 4b, 4c) umfasst,
- wobei die Kontaktflächen (4a, 4b, 4c) in der Kabelführungsanordnung (3) so angeordnet und dimensioniert sind, dass sich das zwischen einer der Kontaktflächen auf seiner ersten Seite und zwei der Kontaktflächen auf seiner zweiten Seite angeordnete Kabel an einer Oberfläche von mindestens einer der Kontaktflächen (4a, 4b, 4c) biegt,
- wobei die Anordnung weiter einen Lenker (6) und eine Steueranordnung (7) umfasst, wobei
- die Kabelführungsanordnung (3) eine zur Normalachse (Xn) der Dreiecksanordnung (5) parallele Drehachse (Xc) umfasst, und
- die Seilführungsanordnung (3) um die Drehachse (Xc) schwenkbar im Lenker (6) befestigt ist, und
- der Lenker (6) schwenkbar um eine Mittelachse (Xr) der Kabelhaspel angeordnet ist, so dass

- die Drehachse (Xc) der Kabelführungsanordnung bei einem ersten Abstand (D) von einer Mittelachse (Xr) der Kabelhaspel liegt und eine Rotationsfähigkeit in Bezug auf die Kabelhaspel aufweist, wobei das Verfahren Folgendes umfasst:

- Messen der vom Kabel gegen eine der Kontaktflächen ausgeübten Kraft und Erzeugen eines Werts für eine Kraft (F),

- Erkennen der Richtung, in die der Lenker (6) in Bezug auf die Längsachse (L) des elektrisch angetriebenen Fahrzeugs zeigt, wodurch Lenkerwinkelinformationen (CA) bereitgestellt werden,

- Bewerten eines Drehwinkels (C) der Dreiecksanordnung in Bezug auf den Lenker (6), wodurch Dreieckswinkelinformationen (TA) bereitgestellt werden, und

- Berechnen einer Schätzung der Kräfte, die auf das Kabel (2) konzentriert sind, basierend auf der Kraft (F), den Lenkerwinkelinformationen (CA) und den Dreieckswinkelinformationen (TA).

**10.** Verfahren nach Anspruch 9, das Wählen zwischen zwei Berechnungsmodellen bei der Berechnung der auf das Kabel (2) konzentrierten Kräfte basierend auf den Lenkerwinkelinformationen (CA) umfasst.

**11.** Verfahren nach Anspruch 10, wobei im Fall, dass der Lenker (6) in eine Richtung zeigt, in der das Kabel (2) nur eine der Kontaktflächen (4a, 4b, 4c) berührt:

Berechnen der Kräfte, die sich in dem Kabel (2) konzentrieren, basierend auf dem Drehwinkel (C) und einem aktuellen Kabelhaspelradius (R), und wobei

im Fall, dass der Lenker (6) in eine Richtung zeigt, in der das Kabel (2) alle Kontaktflächen (4a, 4b, 4c) berührt:

Berechnen der in dem Kabel (2) konzentrierten Kräfte basierend auf einem vorbestimmten Winkel (PA), wobei der vorbestimmte Winkel (PA) durch Abmessungen der Leitrollenanordnung (3) definiert wird.

**12.** Verfahren nach einem der Ansprüche 9 - 11, umfassend Steuern des Drehmoments eines Aufwickelmotors (11) und Verwenden berechneter Kräfte, die sich in dem Kabel (2) konzentrieren, beim Steuern des Drehmoments.

**Revendications**

**1.** Agencement (100) pour dérouler et enrouler un câble dans un véhicule électrique, l'agencement comprenant :

- un enrouleur de câble (1) pour un câble (2),
- un agencement de guidage de câble (3) pour recevoir et guider le câble (2),

- l'agencement de guidage de câble (3) comprenant trois surfaces de contact (4a, 4b, 4c),
agencées parallèlement et selon un agencement en triangle (5),
- les surfaces de contact (4a, 4b, 4c) dans l'agencement de guidage de câble (3) étant agencées et dimensionnées de telle sorte que le câble (2) agencé entre l'une des surfaces de contact sur son premier côté et deux des surfaces de contact sur son second côté fléchisse sur une surface d'au moins une des surfaces de contact (4a, 4b, 4c),

- l'agencement comprenant en outre un bras de commande (6) et un agencement de commande (7), l'agencement de commande (7) comprenant

- un système de mesure de force (8) fourni dans au moins l'une des surfaces de contact (4a, 4b, 4c) et agencé pour mesurer une force provoquée par le câble contre lesdites surfaces de contact, le système de mesure de force (8) fournissant une force (F),
- un agencement de capteur de bras de commande (9) agencé pour détecter la direction dans laquelle le bras de commande (6) pointe par rapport à l'axe longitudinal (L) du véhicule électrique, et pour fournir une information d'angle de bras de commande (CA),
dans lequel

- l'agencement de guidage de câble (3) comprend un axe de rotation (Xc) parallèle à l'axe normal (Xn) de l'agencement en triangle (5),
- l'axe de rotation (Xc) de l'agencement de guidage de câble et l'axe médian (Xr) de l'enrouleur de câble sont agencés dans la même direction,
- l'agencement de guidage de câble (3) est fixé de manière pivotante dans le bras de commande (6), et
- le bras de commande (6) est agencé de manière pivotante par rapport à un axe médian (Xr) de l'enrouleur de câble de telle sorte que
- l'axe de rotation (Xc) de l'agencement de guidage de câble se trouve à une première distance (D) de l'axe médian (Xr) de l'enrouleur de câble et présente une capacité de rotation par rapport à l'enrouleur de câble, et
- un agencement de capteur en triangle (10) est agencé pour évaluer un angle de rotation (A) de l'agencement en triangle (5) par rapport au bras de commande (6) pour fournir une information d'angle de triangle (TA), et dans lequel

l'agencement de commande (7) est agencé pour calculer une estimation de forces se concentrant sur le câble (2) sur la base de la force (F), de l'information d'angle de bras de commande (CA) et de l'information d'angle de triangle (TA).

2. Agencement selon la revendication 1, dans lequel l'agencement de guidage de câble (3) comprend trois roues (13a - 13c), les surfaces de contact (4a, 4b, 4c) étant sur la jante de roue,

l'axe médian (Xw) desdites roues étant agencé parallèlement à l'axe normal (Xn) de l'agencement en triangle (5), et dans lequel l'axe de rotation (Xc) de l'agencement de guidage de câble est agencé à l'intérieur de l'agencement en triangle (5).

3. Agencement selon la revendication 1 ou 2, dans lequel l'agencement de commande (7) est agencé pour choisir entre deux modèles de calcul lors du calcul des forces concentrées sur le câble (2), sur la base de l'information d'angle de bras de commande (CA).

4. Agencement selon la revendication 3, dans lequel, dans un cas où l'agencement de capteur de bras de commande (9) détecte que le bras de commande (6) pointe dans une direction dans laquelle le câble (2) est en contact uniquement avec l'une des surfaces de contact (4a, 4b, 4c), le calcul des forces se concentrant dans le câble (2) est agencé pour être basé sur l'angle de rotation (A) et un rayon d'enrouleur de câble courant (R), et dans lequel dans un cas où l'agencement de capteur de bras de commande (9) détecte que le bras de commande (6) pointe dans une direction dans laquelle le câble (2) est en contact avec toutes les surfaces de contact (4a, 4b, 4c), le calcul des forces se concentrant dans le câble (2) est agencé pour être basé sur un angle prédéterminé (PA), ledit angle prédéterminé (PA) étant défini par les dimensions de l'agencement de roue de câble (3).

5. Agencement selon la revendication 1 ou 2, dans lequel les surfaces de contact (4a, 4b, 4c) de l'agencement de guidage de câble (3) sont agencées dans une autre direction que l'axe d'enrouleur (Xr).

6. Véhicule électrique (12), comprenant l'agencement selon l'une quelconque des revendications précédentes.

7. Véhicule selon la revendication 6, étant un engin minier.

8. Véhicule selon la revendication 6, étant un engin de chantier.

9. Procédé de commande de l'enroulement et du déroulement d'un câble (2) dans un véhicule électrique, procédé dans lequel un agencement est utilisé, comprenant

- un enrouleur de câble (1) pour un câble (2),
- un agencement de guidage de câble (3) pour recevoir et guider le câble (2),
- l'agencement de guidage de câble (3) comprenant trois surfaces de contact (4a, 4b, 4c) agencées parallèlement et selon un agencement en triangle (5),
- les surfaces de contact (4a, 4b, 4c) dans l'agencement de guidage de câble (3) étant agencées et dimensionnées de telle sorte que le câble agencé entre l'une des surfaces de contact sur son premier côté et deux des surfaces de contact sur son second côté fléchisse sur une surface d'au moins une des surfaces de contact (4a, 4b, 4c),
- l'agencement comprenant en outre un bras de commande (6) et un agencement de commande (7), dans lequel
- l'agencement de guidage de câble (3) comprend un axe de rotation (Xc) parallèle à l'axe normal (Xn) de l'agencement en triangle (5), et
- l'agencement de guidage de câble (3) est fixé de manière pivotante par l'axe de rotation (Xc) dans le bras de commande (6), et
- le bras de commande (6) est agencé de manière pivotante par rapport à un axe médian (Xr) de l'enrouleur de câble de telle sorte que
- l'axe de rotation (Xc) de l'agencement de guidage de câble se trouve à une première distance (D) d'un axe médian (Xr) de l'enrouleur de câble et présente une capacité de rotation par rapport à l'enrouleur de câble, le procédé comprenant :
- la mesure d'une force provoquée par le câble contre l'une des surfaces de contact, créant ainsi une valeur pour une force (F),
- la détection de la direction dans laquelle le bras de commande (6) pointe par rapport à l'axe longitudinal (L) du véhicule électrique, fournissant ainsi une information d'angle de bras de commande (CA),
- l'évaluation d'un angle de rotation (C) de l'agencement en triangle par rapport au bras de commande (6), fournissant ainsi une information d'angle de triangle (TA), et
- le calcul d'une estimation de forces concentrées sur le câble (2) sur la base de la force (F), de l'information d'angle de bras de commande (CA) et de l'information d'angle de triangle (TA).

**10.** Procédé selon la revendication 9, comprenant le choix entre deux modèles de calcul lors du calcul des forces concentrées sur le câble (2), sur la base de l'information d'angle de bras de commande (CA).

**11.** Procédé selon la revendication 10, dans lequel, dans un cas où le bras de commande (6) pointe dans une direction dans laquelle le câble (2) est en contact uniquement avec l'une des surfaces de contact (4a, 4b, 4c) :

le calcul des forces se concentrant dans le câble (2) sur la base de l'angle de rotation (C) et d'un rayon d'enrouleur de câble courant (R), et dans lequel

dans un cas où le bras de commande (6) pointe dans une direction dans laquelle le câble (2) est en contact avec toutes les surfaces de contact (4a, 4b, 4c) :

le calcul des forces se concentrant dans le câble (2) sur la base d'un angle prédéterminé (PA), ledit angle prédéterminé (PA) étant défini par les dimensions de l'agencement de roue de câble (3).

**12.** Procédé selon l'une quelconque des revendications 9-11, comprenant la commande du couple d'un moteur d'enrouleur (11), et l'utilisation de forces calculées se concentrant dans le câble (2) lors de ladite commande du couple.

Fig. 1

Fig. 3a

$2T\,sin\alpha = mg$

$So\ T = mg/2sin\alpha$

Fig. 3b

Fig. 2a

Fig. 2b

Fig. 4b

Fig. 4c

Fig. 4a

Fig. 5a

Fig. 5b

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0733329 A

- DE 69733546 T2